Europäisches Patentamt

European Patent Office

Office européen des brevets

(11) Publication number: **0 345 693**
**A1**

## EUROPEAN PATENT APPLICATION

(21) Application number: **89110138.8**

(22) Date of filing: **05.06.89**

(51) Int. Cl.4: **C08G 73/02 , H01B 1/12 ,**
**C25B 3/10 , C25D 13/08 ,**
**H01M 4/60**

(30) Priority: **07.06.88 US 203688**

(43) Date of publication of application:
**13.12.89 Bulletin 89/50**

(84) Designated Contracting States:
**AT BE CH DE ES FR GB GR IT LI LU NL SE**

(71) Applicant: **SIMON FRASER UNIVERSITY**

**Burnaby British Columbia V5A 1S6(CA)**

(72) Inventor: **Funt, Lionel B.**
**1545 Camelot Road**
**West Vancouver British Columbia V7S**
**2L9(CA)**
Inventor: **MacInnes, David, Jr.**
**Chemistry Department - Guilford College**
**Greensboro, North Carolina 27410(US)**

(74) Representative: **Perani, Aurelio et al**
**c/o JACOBACCI-CASETTA & PERANI S.p.A 7,**
**Via Visconti di Modrone**
**I-20122 Milano(IT)**

(54) Soluble conducting polymers of poly-o-methoxyaniline.

(57) This invention is directed to a novel conducting polymer containing o-methoxyaniline and a process of making same. A process of preparing poly-o-methoxyaniline which comprises inducing o-methoxyaniline to undergo successive oxidative-coupling. The invention also pertains to a process of preparing poly-o-methoxyaniline, the process being selected from the group consisting of: (a) adding a solution of $(NH_4)_2S_2O_8$ in acid to o-methoxyaniline; (b) adding a solution of $FeCl_3$ in acid to o-methoxyaniline; (c) polymerizing o-methoxyaniline in an electrochemical cell as a film deposited on an electrode; (d) polymerizing o-methoxyaniline in an electrochemical cell in a solvent such as dimethylformamide:HCl where the polymer is soluble; and (e) adding a solution of o-methoxyaniline in dimethylformanide to ammonium persulfate in dimethylformamide.

EP 0 345 693 A1

# SOLUBLE CONDUCTING POLYMERS OF POLY-o-METHOXYANILINE

## Field of the Invention

This invention is directed to a novel electrically conducting polymer containing o-methoxyaniline and a process of making same.

## Background of the Invention

Electrically conducting polymers have been prepared from heterocyclic or aromatic monomers such as polypyrrole, polythiophene, and polyaniline. There have been many published studies discussing the preparation, structure and spectra, conduction mechanism and applications of these conducting polymers. Conducting polymers can be prepared by oxidative coupling of the monomer, either by the use of a chemical oxidizing agent or through electrochemical oxidation. For the most part, the final products are totally insoluble films which are difficult to characterize by many physical and chemical techniques. While these materials show great potential for applications in areas such as molecular electronic devices, batteries and chemically modified electrodes and sensors, their insolubility, poor physical strength and chemical reactivity have unfortunately made them unsuitable for many end uses.

Of particular interest in this field is polyaniline which is known to give a conducting, air-stable material whose form is sensitive to pH. Polyaniline exhibits a number of highly coloured forms under varying conditions but exists in films with very poor physical properties. Polyaniline has been made in a partly soluble form either by using large organic protonic acids in its synthesis or graft polymerization with another polymer. The possibility arises that the polymer chain in polyaniline can be modified by substituents which change important physical properties such as solubility and film strength.

Certain prior patents may have some relevance to the invention. Japanese Patent No. 61225214 discloses the synthesis of polyaniline by electro-oxidative polymerization of aniline or its water-soluble salt.

U.S. Patent No. 4,615,829 discloses the synthesis of an aniline-oxidation polymer film by subjecting acidic aniline solution to electrolytic oxidation polymerization followed by reduction.

## Summary of the Invention

The invention is directed to a process of preparing poly-o-methoxyaniline which comprises inducing o-methoxyaniline to undergo successive oxidative-coupling.

A process of preparing poly-o-methoxyaniline which comprises oxidizing o-methoxyaniline in a solvent in which o-methoxyaniline is soluble to thereby form a solution, the solution having sufficient conductivity for electrolysis to occur and cause the o-methoxyaniline to undergo successive oxidative coupling.

A process of preparing poly-o-methoxyaniline which comprises oxidizing o-methoxyaniline in a homogeneous solution utilizing a chemical oxidant of power sufficient to induce the o-methoxyaniline to undergo successive oxidative coupling.

A process of preparing poly-o-methoxyaniline selected from the group consisting of: (a) adding a solution of an oxidizing agent in acid to o-methoxyaniline to induce the o-methoxyaniline to undergo successive oxidative coupling; (b) polymerizing o-methoxyaniline as a film in an electrochemical cell utilizing solvent in which the polymerized o-methoxyaniline is insolvent; (c) polymerizing o-methoxyaniline in solution in an electrochemical cell utilizing a solvent in which the polymerized o-methoxyanaline is solvent.

A process of preparing poly-o-methoxyaniline as described which comprises adding a solution of an oxidizing agent in dilute aqueous acid selected from the group consisting of alkaline metal persulfate, ammonium persulfate and iron chloride.

A process as described wherein the dilute aqueous acid is dilute HCl.

A process of preparing poly-o-methoxyaniline as described as a film in an electrochemical cell which comprises utilizing a solvent selected from dilute aqueous acid and propylene carbonate.

A process as described wherein the dilute aqueous acid is dilute HCl.

A process of preparing poly-o-methoxyaniline which comprises polymerizing o-methoxyaniline in

2

solvent solution in an electrochemical cell utilzing a solvent selected from the group consisting of dimethylformamide in HCl and hexamethylphosphoric triamide.

A process of preparing poly-o-methoxyaniline selected from the group consisting of: (a) adding a solution of ammonium persulfate in acid to o-methoxyaniline; (b) adding a solution of FeCl₃ in acid to o-methoxyaniline; (c) polymerizing o-methoxyaniline in an electrochemical cell as a film deposited on an electrode; (d) polymerizing o-methoxyaniline in an electrochemical cell in a solvent wherein the product is soluble: and (e) adding a solution of o-methoxyaniline in CF₃COOH in dimethylformamide to ammonium persulfate in dimethylformamide.

The invention in one aspect involves a process of preparing poly-o-methoxyaniline by adding a solution of ammonium persulfate in acid to o-methoxyniline.

The invention in another aspect involves a process of preparing poly-o-methoxyaniline by adding a solution of FeCl₃ in acid to o-methoxyaniline.

The invention in another aspect involves a process of preparing poly-o-methoxyaniline by polymerizing o-methoxyaniline in an electrochemical cell as a film deposited on an electrode.

The invention in a different aspect involves a process of preparing poly-o-methoxyaniline by polymerizing o-methoxyaniline in an electrochemical cell using a solvent such as dimethylformamide/HCl where the polymer is soluble.

The invention in a further aspect involves a process of preparing poly-o-methoxyaniline by adding a solution of o-methoxyaniline in trifluoroacetic acid and dimethylformamide to ammonium persulfate in dimethylformamide.

Suitable oxidizing agents are ammonium persulfate, lithium persulfate, sodium persulfate, potassium persulfate. calcium persulfate and iron chloride.

Suitable dilute aqueous acids are HCl, $H_2SO_4$, $HClO_4$, $HPF_6$ and $CF_3COOH$.

Suitable solvents in which the poly-o-methoxyaniline is soluble are dimethyl formamide in HCl and hexamethylphosphoric triamide. trifluoroacetic acid, acetic acid and sulferic acid.

The invention also comprises poly-o-methoxyaniline as a novel polymer per se and poly-o-methoxyaniline used as a conducting polymer.

## DRAWINGS

In the drawings which depict specific embodiments of the invention but which should not be construed as restricting the spirit or scope of the invention in any way:

Figure 1 illustrates a graphical depiction of the electrochemical polymerization of o-anisidine (o-methoxyaniline).

Figure 2 illustrates a graphical depiction of an electrochemical cell that is used in polymerizing o-anisidine to poly-o-methoxyaniline.

Figure 3 illustrates a gel permeation chromatograh trace of polyanisidine (PANIS) (poly-o-methoxyaniline) in dimethyl formamide (DMF).

Figure 4 illustrates an (ultra-violet) UV visible absorption spectra of PANIS materials in DMF solution.

Figure 5 illustrates a proton magnetic resonance spectrum of polyanisidine in d-6-MeCN.

Figure 6 illustrates an infrared spectrum of PANIS film deposited from acetonitrile solution.

## Detailed-Description of the Invention

We have been successful in synthesizing a novel, soluble, conducting polymer containing o-methoxyaniline which has utility in many industrial applications. Our invention is also useful in assisting in understanding the chemistry of conducting polymers.

## A. Physical and Chemical Properties

### (a) Solubility and Processability

The great majority of conducting polymers dis covered to date are not soluble in any solvent and thus they have been found difficult to process or use. This has limited their application in industry. In contrast, poly-o-methoxyaniline (also known as polyanisidine or PANIS) is soluble in a number of solvents and can be dissolved and cast with no change in properties. in addition, PANIS is completely soluble in its oxidized, conducting form. In this respect, it is unlike the other soluble conducting polymers which are prepared electrochemically as films and are only marginally soluble until they have been reduced. To process these soluble conducting polymers, therefore, they must be prepared, reduced, dissolved, cast and finally reoxidized.

(b) Synthesis

PANIS (poly-o-methoxyaniline) can be made by a variety of methods in quantities ranging from very small to large. This distinguishes it from other conducting polymers of this type which can only be prepared in very small quantities (i.e. milligrams).

PANIS can be prepared by any one of the following methods:

(a) Chemical: large quantities (grams) can be easily isolated.

(b) Electrochemical film: small quantities (mg) as films can be prepared using this method.

(c) Electrochemical solution: large quantities (g) can be produced. Control of the charge passed (current and time) prepares precise quantities in solution for future use.

The starting materials, monomer and oxidants are relatively inexpensive, easily available and have well known properties.

(c) Environmental Impact

At present, the toxicity is unknown. However, because of polymerization, the toxicity level inherently has to be less than the monomer which is toxic. Since PANIS contains no metals or halogenated hydrocarbons, it can be easily incinerated or decomposed by secondary sewage treatment methods (i.e. it is biodegradable).

(d) Monodisperse Nature

Since PANIS is formed with a narrow range of molecular weights, it has important rheological properties. It can be used in polymer solutions, dispersions and liquid crystals.

(e) Electrochromic Nature

PANIS exists in four different states with differing colours and conductivity (see Table 1 below). These states depend upon acidity and oxidation level. Changes between states are reversible and occur relatively rapidly (e.g. less than 1 second for a thin film).

(f) Solvochromic Nature

PANIS has different colours in different solvents. For example, oxidized PANIS is green in aqueous acidic dimethylformamide, blue in pure dimethylformamide and red-blue in acetonitrile.

B. Experimental Results

Example 1

4

Chemical Polymerization

(a) Synthesis

Oxidized poly-o-methoxyaniline (formula $C_{14}H_{13}O_2N_2$) was prepared by a chemical method identical to that used with polyaniline. A solution of ammonium persulfate in 1 molar HCl was added to o-methoxyaniline in the same acid. After addition, the solution was stirred for several hours and the resulting powder was filtered to give 20-24% product.

FeCl$_3$ can be substituted for ammonium persulfate and HClO$_4$ or HPF$_6$ or CF$_3$COOH can be substituted for HCl.

(b) Properties

The resulting material was a dark purple powder with conductivity of 3.0 S (4 probe on pressed pellet). The powder had good solubility in solvents such as dimethyl formanide (DMF), trifluoroacetic acid, acetic acid and sulfuric acid and was partially soluble in CH$_3$CN, CHCl$_3$, and CH$_2$Cl$_2$. This material had an elemental analysis of C: 58.5% (theory 60.5%), H: 5.2% (5.1%), and N: 10.3% (10.1%). A UV-visible spectrum of the material in DMF as prepared showed absorbances due to polymer at 740 nm, 540 nm (molar extinction coefficient = 800 L mol cm), 330 nm and 255 nm. After neutralization, the same material exhibited absorbances at 610 nm and 305 nm.

Example 2

Electrochemical Polymerization

(a) Synthesis of Conducting Films

O-Methoxyaniline was polymerized electrochemically as follows. A conducting film was grown from a 0.3 M solution of the monomer in 1 molar aqueous acid HCl. (HClO$_4$, HPF$_6$ or CF$_3$COOH can be used in place of HCl).

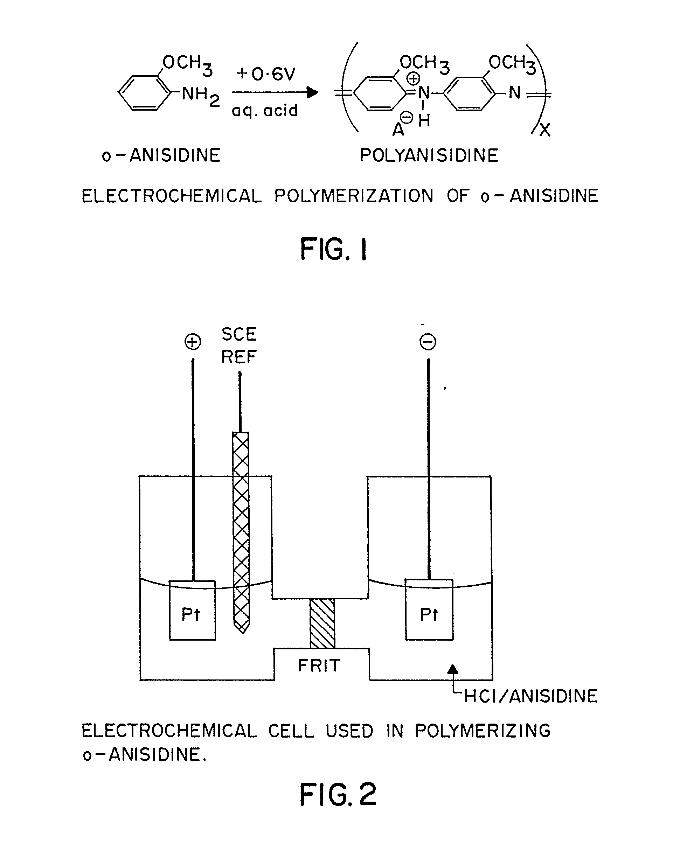

The polymerization was conducted under nitrogen gas on platinum foil in a 2 cell system with a platinum mesh counter electrode, using a potential of +0.6V versus Standard Calomel Electrode (see Figures 1 and 2). (ITO glass can be used instead of platinum foil).

(b) Properties

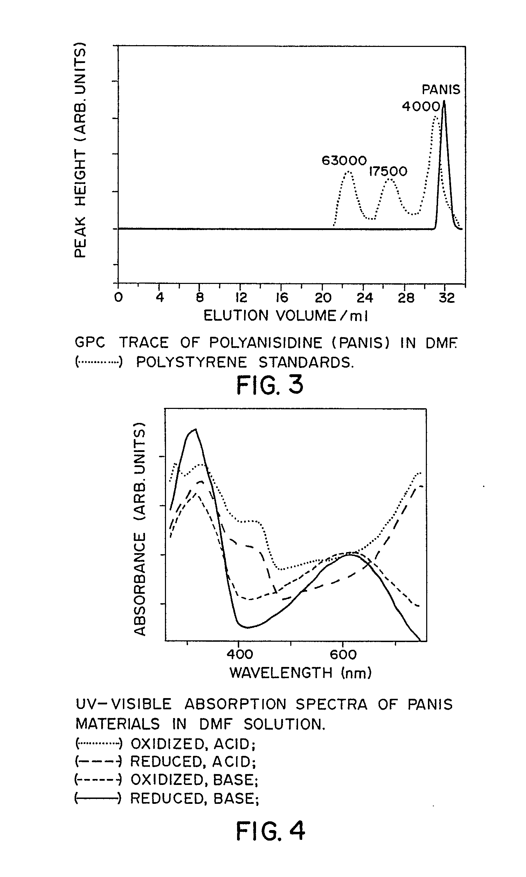

This polymer had a conductivity of 3 s (2 probe) and demonstrated the striking colour changes that can be seen in polyaniline. The polymer film that was grown on the surface of the electrode was washed with aqueous acid to remove any unreacted monomer and then dried under vacuum. The polymer was then dissolved in DMF and analyzed by gel permeation chromatography (GPC). The extreme nondispersed nature of poly-o-methoxyaniline can be clearly seen in Figure 3 where the GPC traces of the polymer and polystyrene standards are compared. $M_n/M_w$ for the standards was <1.06 (Poly-sciences, Inc.).

Example 3

Electrochemical polymerization

## (a) Synthesis in Solution

Poly-o-methoxyaniline was produced in solution rather than as a solid powder (Example 1) or on an electrode (Example 2). The electrochemical polymerization was conducted at +0.60V (vs SCE) in a mixed solvent where the polymer was soluble, namely 2:1 DMF to 1M HCl. Very low currents were observed in this electrolyte at the potentials used when the monomer was absent. With monomer present, currents of 3-5 mA.cm$^2$ were passed and the electrolyte became highly coloured about the anode. Gas evolution was noticed at the cathode, similar to that seen in totally aqueous solutions. Since the electrodes remained clean, it was possible to conduct the reaction to a much higher degree of completion (at least 80%) than has previously been seen with insoluble systems (generally only about 1-2%). The aqueous solvent mixture was removed by evaporation under vacuum and the residue was washed with 1M HCl in order to eliminate unreacted monomer. After again drying under vacuum, the residue was dissolved in DMF and analyzed as before. If the HCl wash step is omitted, an additional peak due to monomer is seen in the GPC trace.

## (b) Properties

This material had a molecular weight similar to other forms of poly-o-methoxyaniline (see Table 2). It also had similar colour and conductivity.

## Example 4

## Chemical Polymerization

### (a) Synthesis

Polymerization in solution was carried out using chemical oxidants in the following manner. A solution of 0.27M o-methoxyaniline in 1M CF$_3$COOH in dimethylformamide was added to 0.22 M ammonium persulfate in the same solvent. After stirring for several hours, the solution was filtered, yielding a few crystals of LiClO$_4$ and a dark solution. The solution was evaporated and impurities were removed with aqueous acid and water.

### (b) Properties

The residue obtained by this process behaved identically to that produced by conventional polymerization.

### (c) General Properties

Certain properties of the different forms of electrochemically polymerized o-methoxyaniline are shown in Table 1.

TABLE 1

| Properties of Polyanisidine Materials | | | | |
|---|---|---|---|---|
| FORM | FILM COLOUR | CONDUCTIVITY (Siemens) | SOLUBILITY | ABSORPTIONS (eV) |
| OXIDIZED | | | | |
| acid | green | 13 | DMF, $CH_3CN$ $CF_3COOH$ | 3.8,2.9,1.7 |
| base | purple | | DMF | 4.0,2.7 |
| REDUCED | | | | |
| acid | gold | 0.1 | DMF, $CH_3CN$ $CF_3COOH$ | 4.0,2.9,1.6 |
| base | blue | | DMF | 3.7,2.0 |

Molecular weights of the polymer were measured by Gel Permeation Chromatography (GPC) and results for the various syntheses of poly-o-methoxyaniline are reported in Table 2 below.

TABLE 2

| Molecular Weights of Synthesized Polyanisidines | | | | | |
|---|---|---|---|---|---|
| METHOD OF SYNTHESIS | | | $M_n$ | $M_n, M_w$ | (Degree of Polymerization) DP |
| Chemical Oxidation | | | | | |
| | 1. | Persulfate | | | |
| | | a. acid form | 2100 | 1.01 | 17 |
| | | b. acid then base | 2300 | 1.01 | 19 |
| | 2. | Ferric chloride | 2300 | 1.02 | 19 |
| Electrochemical[b] | | | | | |
| | 3. | 1M HCl | | | |
| | | a. constant I | 2000 | 1.01 | 16 |
| | | b. constant E | 2100 | 1.01 | 17 |
| | 4. | 1M $HClO_4$ | 1900 | 1.01 | 16 |
| | 5. | DMF/HCl | 2200 | 1.01 | 18 |
| a. All polymers except 1b were analyzed in the acid, oxidized and conducting form. | | | | | |

b. Electrochemically oxidized at +0.6V (vs SCE) except for 3a which was oxidized at a constant current of 1 mA/cm$^2$.

Other Properties

UV-Visible Spectra.

The UV-Visible spectra of polyanisidine are shown in Figure 4. The protonated oxidized form is similar to that of polyaniline and indicates a band gap for the conducting, acidic form of 1.7 eV (Table 1). The spectrum and band gap of the protonated reduced form are similar to the oxidized material and indeed its conductivity is quite high at 0.1S.

Proton Magnetic Resonance Spectrum.

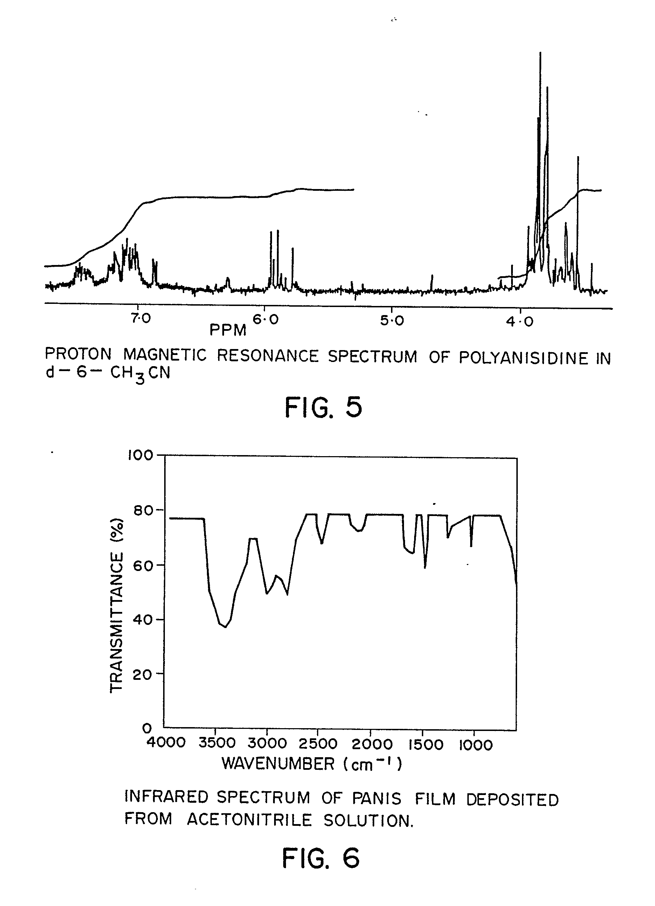

The proton magnetic resonance spectrum of the oxidized-acid film in $CD_3CN$ (Figure 5) shows a set of methoxy peaks around 3.9 - 3.8 ppm (area 3) and a group of aromatic peaks from 7.4 to 6.9 ppm (area 3). The monomer spectrum indicates a methoxy peak at 3.9 ppm and aromatic peaks from 6.8 to 6.9 ppm. No absorptions due to N-H protons were seen, probably due to exchange with the solvent. Since previously it was shown by solid state carbon-13 NMR that both benzenoid and quinoid rings are present in polyaniline, a substituted polyaniline should not give the simple proton NMR spectrum expected of a linear polymer. Thus the complicated set of peaks in Figure 5 could be due to a linear polymer chain containing both benzenoid and quinoid rings. While the areas are correct for the assignments, this spectrum does not rule out any non-linear structures.

Infrared Analysis.

The infrared analysis of chemically synthesized polyanisidine (Figure 6) (film deposited from acetonitrile solution) showed the following peaks (in $cm^{-1}$ with their assignments) 3400, (secondary N-H); 3000 (aromatic C-H); 1730 (C-O); 1580 (C=N); and 1470 (C-C aromatic). With the exception of the absorption due to the C-O bond, these peaks are similar to those found for chemically prepared polyaniline.

Cyclic Voltammetry.

The cyclic voltammetry of the film was similar to that found for polyaniline with two oxidation peaks at +0.18V and +0.34V and two reduction peaks at +.14V and +0.28V. The material is yellow at potentials lower than +0.18V (vs SCE) and green above +0.34V. In air, the reduced form is unstable, spontaneously oxidizing to the oxidized, conducting form.

Molecular Weight.

Molecular weight measurements of both chemically and electrochemically synthesized polyanisidine give the same results (see Table 2), namely a very sharp peak centered at a molecular weight of 2100 (average degree of polymerization = 18). The peaks are extremely sharp ($M_n, M_w$ = 1.01).

Colour Changes.

A film of poly-o-methoxyaniline grown according to the method in Example 2 shows the following colours in the solid state:

| acid, | oxidized: | green |
|-------|-----------|-------|
| acid, | reduced: | pale yellow |
| base, | oxidized: | purple |
| base, | reduced: | blue |

When oxidized polymer is dissolved in DMF and treated with aqueous acid or base, the identical colours are seen in solution. If the polymer is first reduced using aqueous hydrazine and again treated with aqueous acid or base, the identical colours are seen.

Other.

Poly-o-aniline can be dissolved and recast into a film with identical conductivity as before. This material is stable in air and exhibits no change in conductivity over several months.

(e) Measurements

Infrared Spectroscopy.

Spectra were run of both KBr pellets and acetonitrile solutions on a Perkin Elmer 599B spectrophotometer.

UV-Visible Spectroscopy.

All UV-visible spectra were obtained in either solution (acetonitrile, DMF) or from a film grown on ITO conducting glass on a Perkin Elmer Lambda 3A spectrophotometer.

Proton nmr Spectroscopy.

o-Anisidine was run in $CDCl_3$ solution and poly-o-methoxyaniline was run in $CD_3CN$ on a Bruker SY100.

Molecular Weight Measurements.

Molecular weights were determined in DMF on a Waters GPC/ALC gel permeation chromatograph equipped with three STYRAGEL (trademark) columns and a differential refractometer detector. The molecular weights were obtained in the usual manner from the retention time calibration curve using a series of polystyrene standards (supplied by Polysciences, Inc.) with molecular weights spanning 2900 to 63000. While these weights were corrected for the viscosity of the solutions used, the quoted values should be considered as approximate, as the calibration to the conjugated poly-o-methoxyaniline is only approximate.

Conductivity Measurements.

Conductivity was measured at room temperature using both two and four probe methods.

(f) Applications

The novel conducting polymers of the invention can have any of the following applications in industry.

(a) Batteries. A thin film of oxidized PANIS in a cell containing a lithium electrode in an electrolyte of lithium perchlorate in propylene carbonate gave a potential of 3.7 V and a short circuit current of 1 mA/cm². The battery could be recharged and gave 90% efficiency.

(b) Optical Switching and Coloured Displays. Since PANIS is highly electrochromic and its colour and conductivity can be changed reversibly, it can be used as an optical switch, a computer memory device or in coloured displays.

(c) Additive for Enhancing Electrical Conductivity. Any commerically available polymer (plastic) which can be dissolved in solvents which can also dissolve PANIS can be blended with PANIS to increase its electrical conductivity. Both polymers are dissolved in the same solvent, mixed and the solvent removed. Applications for this blended mixture can be in electromagnetic shielding and electrostatic protection for radios, computers, telephones and other communication and electronics. PANIS can also be blended with a plastic and solvent to make a conductive paint.

(d) Drug Delivery. Reduction of the oxidized PANIS releases the counter-ion from the polymer chain. PANIS can be dissolved into a fluid such as blood and transported to the desired area. The PANIS molecule is too large to pass through membranes but if the polymer is reduced, the counter-ions will be released to the solution. If the counter-ion contains the required drug, it will then be available and can pass through the membranes in order to carry out its function.

As will be apparent to those skilled in the art in light of the foregoing disclosure, many alterations and

EP 0 345 693 A1

modifications are possible in the practice of this invention without departing from the spirit or scope thereof. Accordingly, the scope of the invention is to be construed in accordance with the substance defined by the following claims.

## Claims

1. A process of preparing poly-o-methoxyaniline which comprises inducing o-methoxyaniline to undergo successive oxidative-coupling.

2. A process of preparing poly-o-methoxyaniline which comprises oxidizing o-methoxyaniline in a solvent in which o-methoxyaniline is soluble to thereby form a solution, the solution having sufficient conductivity for electrolysis to occur and cause the o-methoxyaniline to undergo successive oxidative coupling.

3. A process of preparing poly-o-methoxyaniline which comprises oxidizing o-methoxyaniline in a homogeneous solution utilizing a chemical oxidant of power sufficient to induce the o-methoxyaniline to undergo successive oxidative coupling.

4. A process of preparing poly-o-methoxyaniline selected from the group consisting of:

(a) adding a solution of an oxidizing agent in acid to o-methoxyaniline to induce the o-methoxyaniline to undergo successive oxidative coupling;

(b) polymerizing o-methoxyaniline as a film in an electrochemical cell utilizing solvent in which the polymerized o-methoxyaniline is insoluble;

(c) polymerizing o-methoxyaniline in solution in an electrochemical cell utilizing a solvent in which the polymerized o-methoxyaniline is soluble.

5. A process of preparing poly-o-methoxyaniline as described in claim 1 which comprises adding a solution of an oxidizing agent in dilute aqueous acid selected from the group consisting of alkali metal persulfate, ammonium persulfate and ferric chloride.

6. A process as described in claim 5 wherein the dilute aqueous acid is dilute HCl.

7. A process of preparing poly-o-methoxyaniline as described in claim 1 as a film in an electrochemical cell which comprises utilizing a solvent selected from dilute aqueous acid and propylene carbonate.

8. A process as described in claim 7 wherein the dilute aqueous acid is dilute HCl.

9. A process of preparing poly-o-methoxyaniline which comprises polymerizing o-methoxyaniline in solution in an electrochemical cell utilizing a solution selected from the group consisting of HCl in dimethylformamide and HCl in hexamethylphosphoric triamide.

10. A process of preparing poly-o-methoxyaniline selected from the group consisting of:

(a) adding a solution of ammonium persulfate in acid to o-methoxyaniline;

(b) adding a solution of FeCl$_3$ in acid to o-methoxyaniline;

(c) polymerizing o-methoxyaniline in an electrochemical cell as a film deposited on an electrode;

(d) polymerizing o-methoxyaniline in an electrochemical cell in a solvent wherein the product is soluble; and

(e) adding a solution of o-methoxyaniline in CF$_3$COOH in dimethylformamide to ammonium persulfate in dimethylformamide.

11. A process of preparing poly-o-methoxyaniline comprising adding a solution of ammonium persulfate in acid to o-methoxyaniline.

12. A process of preparing poly-o-methoxyaniline comprising adding a solution of FeCl$_3$ in acid to o-methoxyaniline.

13. A process of preparing poly-o-methoxyaniline comprising polymerizing o-methoxyaniline in an electrochemical cell as a film deposited on an electrode.

14. A process of preparing poly-o-methoxyaniline comprising polymerizing o-methoxyaniline in an electrochemical cell using a solvent wherein the product is soluble.

15. A process of preparing poly-o-methoxyaniline comprising adding ammonium persulfate in acidified dimethylformamide to o-methoxyaniline in the same solvent.

16. A process as desribed in claim 11, 12 or 15 wherein the acid is selected from the group consisting of HCl, H$_2$SO$_4$, HClO$_4$, HPF$_6$ and CF$_3$COOH.

17. A process as described in claim 14 wherein the solvent is dimethylformamide/HCl.

18. A process of preparing poly-o-methoxyaniline comprising adding a solution of ammonium persulfate in dilute HCl to o-methoxyaniline.

10

19. A process of preparing poly-o-methoxyaniline comprising adding a solution of FeCl₃ in dilute HCl to o-methoxyaniline.

20. A process as described in claim 13 wherein dilute HCl is present in the electrochemical cell.

21. A process of preparing poly-o-methoxyaniline comprising adding a solution of o-methoxyaniline in dimethylformamide acidified with HCl to ammonium persulfate in the same solution.

22. Poly-o-methoxyaniline.

23. A conducting polymer comprising poly-o-methoxyaniline.

ELECTROCHEMICAL POLYMERIZATION OF o−ANISIDINE

## FIG. I

ELECTROCHEMICAL CELL USED IN POLYMERIZING o−ANISIDINE.

## FIG. 2

GPC TRACE OF POLYANISIDINE (PANIS) IN DMF
(··········) POLYSTYRENE STANDARDS.

## FIG. 3

UV-VISIBLE ABSORPTION SPECTRA OF PANIS
MATERIALS IN DMF SOLUTION.
(··········) OXIDIZED, ACID;
(— — —) REDUCED, ACID;
(------) OXIDIZED, BASE;
(———) REDUCED, BASE;

## FIG. 4

PROTON MAGNETIC RESONANCE SPECTRUM OF POLYANISIDINE IN
$d-6-CH_3CN$

## FIG. 5

INFRARED SPECTRUM OF PANIS FILM DEPOSITED
FROM ACETONITRILE SOLUTION.

## FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,X | ELECTROCHIMICA ACTA, vol. 33, no. 8, 1988, pages 1077-1084, Pergamon Press plc, GB; S. CATTARIN et al.: "Electrosynthesis and properties of ring-substituted polynilines" * Page 1077, bottom column on the left: subject-matter presented at the 38th meeting of the I.S.E., Maastricht, NL, September 1987 * | 1-23 | C 08 G 73/02<br>H 01 B 1/12<br>C 25 B 3/10<br>C 25 D 13/08<br>H 01 M 4/60 |

TECHNICAL FIELDS
SEARCHED (Int. Cl.4)

C 08 G
H 01 B

The present search report has been drawn up for all claims

| Place of search | Date of completion of the search | Examiner |
|---|---|---|
| THE HAGUE | 02-09-1989 | LEROY ALAIN |